# EUROPÄISCHE PATENTSCHRIFT

(11) **EP 0 763 561 B1**
(45) Veröffentlichungstag und Bekanntmachung des Hinweises auf die Patenterteilung: **02.06.1999**
(21) Anmeldenummer: 96114217.1
(22) Anmeldetag: 05.09.1996
(51) Int. Cl.: C08K 5/00, C08J 3/22, C08L 21/00

(54) **Polymercompounds und ihre Verwendung für die Vulkanisation halogenhaltiger Kautschuke**
Polymer compositions and their use for the vulcanisation of halogen-containing rubber
Compositions polymères et leur utilisation pour la vulcanisation de caoutchoucs contenant de l'halogène

(30) Priorität: 18.09.1995 DE 19534621
(43) Veröffentlichungstag der Anmeldung: 19.03.1997
(73) Patentinhaber: BAYER AG, 51368 Leverkusen (DE)
(72) Erfinder: Schubart, Rüdiger, Dr., 51467 Bergisch Gladbach (DE); Musch, Rüdiger, Dr., 51467 Bergisch Gladbach (DE); Happ, Michael, Dr., 41539 Dormagen (DE)

(56) Entgegenhaltungen:
- EP-A- 0 234 205
- EP-A- 0 251 760
- GB-A- 784 189
- US-A- 2 888 444
- US-A- 3 931 090

## Beschreibung

Die Erfindung betrifft Polymercompounds aus Amidinen, Mercaptoverbindungen und Polymeren sowie deren Verwendung für die Vulkanisation halogenhaltiger Kautschuke. Die mittels der Polymercompounds erhaltenen Vulkanisate halogenhaltiger Kautschuke zeichnen sich durch eine verringerte Neigung zu unerwünschter Nachvulkanisation aus und sind bei hohen Lagertemperaturen stabiler gegen thermischen und oxidativen Abbau. Durch die Verwendung der genannten Polymercompounds werden darüber hinaus die physikalischen Eigenschaften der vulkanisierten Kautschuke positiv beeinflußt.

Polychloroprene lassen sich bekanntlich durch Behandlung mit z.B. Diaminen, Diphenolen, Thioharnstoffen und/oder Metalloxiden vulkanisieren. In der Regel hat man zwischen schwefelmodifizierten und nicht-schwefelmodifizierten Typen zu unterscheiden: Bei den erstgenannten ist die alleinige Verwendung von Metalloxiden meistens ausreichend, wogegen aufgrund der geringeren Vernetzungstendenz der nicht-schwefelmodifizierten Polychloroprene neben den ebenfalls erforderlichen Metalloxiden zusätzlich der Einsatz von speziellen Vulkanisationsbeschleunigern erforderlich ist; vgl. W. Hofmann, Vulkanisation & Vulkanisationshilfsmittel, Verlag Berliner Union GmbH, Stuttgart 1965, S. 274.

Als Metalloxide setzt man üblicherweise Zinkoxid als Vernetzungsmittel und Magnesiumoxid vorwiegend als Chlorakzeptor ein. Die alleinige Verwendung von Zinkoxid führt zu rascher An- und Ausvulkanisation, aber auch zu einer ungenügenden Vernetzung. Die alleinige Verwendung von Magnesiumoxid führt zwar zu sicherer Verarbeitbarkeit, leider aber auch zu einem sehr langsamen Vulkanisationsverlauf und zu sehr niedrigen Vulkanisationsgraden. Bei gleichzeitiger Verwendung von Magnesiumoxid und Zinkoxid erhält man eine synergistische Vulkanisierwirkung und bei einem geeignetem Mischungsverhältnis eine ausgewogene Kombination von Anvulkanisationszeit und erreichbarem Vulkanisationsgrad.

Trotzdem wird sowohl bei schwefelmodifizierten als auch bei nicht-schwefelmodifizierten Polychloroprenen das Optimum des Vulkanisationsgrades nicht erreicht, vielmehr findet eine allmählich ablaufende Nachvernetzung statt, die auch als Grund für das Alterungsverhalten von Polychloroprenvulkanisaten - vorzugsweise bei hoher thermischer Belastung und insbesondere bei zusätzlicher dynamischer Beanspruchung - anzusehen ist.

Durch den Zusatz von Alterungsschutzmitteln auf der Basis von Diphenylamin, Phenylendiamin, Phenol, Enolether oder Mercaptobenzoimidazol läßt sich die Alterungsbeständigkeit verbessern, wobei Mercaptobenzoimidazol die Lagerbeständigkeit der nicht vulkanisierten Mischung deutlich reduziert.

Weiterhin wird in DE-A 39 42 463 ein Verfahren beschrieben, wonach die Stabilität von Polychloropren-Vulkanisaten durch die Gegenwart von Amidinen und von Metalloxid, das frei von Magnesiumoxid ist, günstig beeinflußt wird. Die resultierenden Vulkanisate altern weniger stark, was an einem verringerten Abfall der mechanischen Eigenschaften zu erkennen ist. Durch dieses Verfahren wird jedoch ebenfalls die Lagerfähigkeit von Mischungen ungünstig beeinflußt, d.h. Anvulkanisationszeit und Scorchzeit werden deutlich kürzer. Dies wird besonders bei Mischungen deutlich, die schwefelmodifiziertes Polychloropren enthalten.

Überraschenderweise wurde nun gefunden, daß der Zusatz von polymergebundenen Blends aus Amidinen und bestimmten Mercaptoverbindungen sowohl die Lagerfähigkeit der unvulkanisierten Mischungen als auch die Alterungsbeständigkeit der Vulkanisate gegenüber den oben beschriebenen Verfahren deutlich verbessern. Darüber hinaus wird das Eigenschaftsbild der vulkanisierten Kautschuke günstig beeinflußt.

Gegenstand der vorliegenden Erfindung sind also Polymercompounds bestehend aus
a) cyclischen und/oder acyclischen Amidinen,
b) Mercaptoverbindungen des Benzothiazols, Benzoimidazols, Benzopyrimidins und/oder des Benzotriazins und
c) Ethylen/Propylen-Kautschuken (EP(D)M), Ethylenvinylacetat-Kautschuken (EVM), Butadienkautschuken (BR), Styrol-Butadien-Kautschuken (SBR), Naturkautschuken (NR), Butadien Acrylnitril-Kautschuk (NBR) und/oder Butylkautschuken (IIR),
wobei im Compound die Komponenten a) und b) im Molverhältnis von 0,25:1 bis 2:1, bevorzugt 0,5:1 bis 1,5:1, vorliegen und der Anteil des Polymerbinders c) 90 bis 10 Gew.%, bevorzugt 30 bis 60 Gew.%, bezogen auf das Gesamtgewicht der Komponenten a) bis c), beträgt.

Als cyclische oder acyclische Amidine können für die erfindungsgemäßen Polymercompounds Amidine gemäß DE-A 3 942 463 verwendet werden, wobei Verbindungen der dort beschriebenen allgemeinen Formeln III und IV bevorzugt sind. Ganz besonders bevorzugt ist die Verwendung von 1,8-Diazabicyclo - (5.4.0)-undecen (7) (DBU) oder 1,5-Diazabicyclo-(4.3.0)nonen-(5) (DBN). Natürlich können die Amidine auch als Adsorbate auf organischen oder anorganischen Trägern, z.B. Kaolin, Kreide oder Aktivkohle, in fester Form zudosiert werden.

Als Mercaptoverbindungen kommen Mercaptoverbindungen des Benzothiazols, Benzoimidazols, Benzopyrimidins und Benzotriazins in Frage. Bevorzugt werden die Mercaptoverbindungen des Benzothiazols, des Benzoimidazols und des 4,5-Methylbenzoimidazols eingesetzt, wobei Mercaptobenzoimidazol und 4-Methyl- oder 5-Methyl-Mercaptobenzo imidazol besonders bevorzugt sind.

Als Polymerkomponenten c) kommen besonders EP(D)M und EVM in Frage.

Die Komponenten a) bis c) können jeweils sowohl einzeln als auch in beliebigen Mischungen untereinander eingesetzt werden. Falls Mischungen von Amidinen a), Mercaptoverbindungen b) oder Polymeren c) untereinander eingesetzt werden, kann das jeweils günstigste Mischungsverhältnis leicht durch entsprechende Vorversuche ermittelt werden. Dieses richtet sich dann auch nach dem erwünschten Eigenschaftsbild der herzustellenden Vulkanisate.

Die Herstellung der erfindungsgemäßen Polymercompounds kann in üblicher Weise durch Mischen der Komponenten a) bis c) in üblichen Mischaggregaten, wie Innenmischer, Extruder oder Walze, erfolgen, wobei den Komponenten a) bis c) noch andere Kautschukhilfsmittel oder Trägermaterialien, wie Ruß, Kreide, Kaolin, Kieselsäure, Weichmacher, Farbstoffe, Biocide und/oder Vulkanisationsbeschleuniger zugemischt werden können. Nach Abmischen der Komponenten a) bis c) in den üblichen Mischaggregaten werden die Polymercompounds anschließend in entsprechende übliche Gebrauchsformen, wie Granulat, überführt.

Gegenstand der vorliegenden Erfindung ist außerdem die Verwendung der oben beschriebenen Polymercompounds bei der Vulkanisation halogenhaltiger Kautschuke, alleine oder in Kombination mit anderen Kautschuken. Dabei werden die erfindungsgemäßen Polymercompounds in einer Menge von 0,1 bis 20 Gew.-Teile./100 Gew.-Teile Kautschuk eingesetzt.

Bevorzugte halogenhaltige Kautschuke, die mit den erfindungsgemäßen Polymercompounds vor der Vulkanisation abgemischt werden können, sind Polychloroprenkautschuke, Chlorbutylkautschuke, Brombutylkautschuke, chloriertes Polyethylen, chlorsulfoniertes und alkyliertes, chlorsulfoniertes Polyethylen und/oder chloriertes Polybutadien, bevorzugt Polychloroprene und Chlor- sowie Brombutyl-Kautschuke. Die halogenhaltigen Kautschuke sind bekannt und beispielsweise beschrieben in: "The Synthetic Rubber Manual, 11. Auflage. Internat. Institute of Synthetic Rubber Producers Inc. Houston/Texas" und "Ullmann's Encylopedia of Industrial Chemistry, Vol A23, 1993, 239-365".

Erfindungsgemäß werden die Polymercompounds mit den halogenhaltigen Kautschuken vor der Vulkanisation auf üblichen Mischaggregaten gemischt. Bevorzugte Mischaggregate sind die in der Kautschukindustrie üblichen Kneter, Walzen und Mischextruder, die in der Regel mit Scherraten von 1 bis 1.000 sec⁻¹, vorzugsweise 1 bis 200 sec⁻¹, arbeiten.

Die Vulkanisation kann bei Temperaturen von 20 bis 250°C, vorzugsweise 140 bis 210°C, gegebenenfalls unter einem Druck von 10 bis 200 bar, erfolgen.

Die erfindungsgemäß hergestellten Vulkanisate können überall dort mit Vorteil eingesetzt werden, wo hohe thermische Belastung und dynamische Beanspruchung das Risiko frühzeitiger Alterung mit sich bringen, beispielsweise also bei Achsmanschetten, Keilriemen, Zahnriemen, Fördergurte, Puffer, Federelemente sowie Kühlerschläuche.

### Beispiele

**Tabelle 1**

| **Einsatzstoffe zur Herstellung der erfindungsgemäßen Beispiele und der Vergleichsbeispiele** | |
|---|---|
| **Einsatzstoffe** | **Verwendetes Material**^{**1)**} |
| 1,8 Diaza-bicyclo (5.4.0)-undecen-(7) | DBU |
| 4/5-Methylmercaptobenzoimidazol(Gemisch) | Vulkanox MB 2 |
| 2-Mercaptobenzothiazol | Vulkacit Merkapto |
| EPDM-Polymer | EPDM 227 |
| | EPDM 345 |
| | AP 147 |
| EPM-Polymer | EPM 306 |
| EVM-Polymer | Levapren 700 HV |
| | Levapren 452 K |
| Polychloropren - Schwefeltyp | Baypren 611 |
| | Baypren 510 |
| Polychloropren-Allzwecktyp | Baypren 210 |
| Chlorbutyl-Polymer | Chlorbutyl 1240 |
| Brombutyl-Polymer | Brombutyl 2030 |
| Polybutadien | CB11 |
| Styrol-Butadien-Kautschuk | Krylene 1500 |
| Naturkautschuk | TSR S Defo 700 |
| Butylkautschuk | Butyl 402 |

| | |
|---|---|
| ¹⁾ Verkaufs- und Handelsprodukte der Bayer AG und deren Tochterfirmen, außer Naturkautschuk | |

### Herstellung der Compounds

### Batch-Verfahren:

Auf einem kühlbaren Walzwerk wurden bei 40°C, einer Friktion von 1:1,2 (20:24 upm) und einem Walzenspalt von 0,4 mm zuerst das Polymer mastiziert bis sich ein geschlossenes Walzfell bildete. Danach wurden die Mercaptoverbindung und dann das Amidin zugesetzt und eingemischt. Nachdem sich beide Substanzen gleichmäßig verteilt hatten, wurde das Walzfell dünn ausgezogen und das Material zerkleinert. Die so hergestellten Batche sind in Tabelle 2 Nr. D-P zusammengestellt.

### Kontinuierliche Herstellung:

In einer Zweiwellenschnecke vom Typ ZSK 32 mit Düsenaustrag wurden die 3 Komponenten kontinuierlich, bei Temperaturen bis 100°C zugegeben, bei 60 Upm gemischt und über die Düse als Strang ausgetragen. Der Produktstrang wurde mit Stickstoff gekühlt, granuliert und schwach talkumiert. Die so hergestellten Compounds sind in Tab. 2 unter Beispiel A-C aufgeführt.

**Tabelle 2**

| **Erfindungsgemäße Beispiele** | | | | | | |
|---|---|---|---|---|---|---|
| Nr. | Polymer | Menge g | Mercaptoverbindung | Menge in g/mol | Amidin | Menge in g/mol |
| A | Levapren 452 K | 1500 | Vulkanox MB2 | 360/2,1 | DBU | 300/1,9 |
| B | Levapren 452 K | 900 | Vulkanox MB2 | 1100/6,6 | DBU | 480/3,1 |
| C | Levapren 700 HV | 900 | Vulkanox MB2 | 1100/6,6 | DBU | 360/2,3 |
| D | Levapren 700 HV | 90 | Vulkacit Mercapto | 60/0,36 | DBU | 48/0,31 |
| E | EPDM 227 | 100 | Vulkanox MB2 | 50/0,30 | DBU | 50/0,32 |
| F | EPM 306 | 100 | Vulkanox MB2 | 50/0,30 | DBU | 50/0,32 |
| G | AP 147 | 100 | Vulkanox MB2 | 50/0,30 | DBU | 50/0,32 |
| H | AP 147 | 80 | Vulkanox MB2 | 75/0,45 | DBU | 50/0,32 |
| | Levapren 452K | 20 | | | | |
| I | AP 147 | 50 | Vulkanox MB2 | 75/0,45 | DBU | 50/0,32 |
| | Levapren 452K | 50 | | | | |
| K | AP 147 | 20 | Vulkanox MB2 | 75/0,45 | DBU | 50/0,32 |
| | Levapren 452K | 80 | | | | |
| L | Levapren 452K | 100 | Vulkanox MB2 | 75/0,45 | DBU | 50/0,32 |
| M | CB11 | 100 | Vulkanox MB2 | 75/0,45 | DBU | 50/0,32 |
| N | Krylene 1500 | 100 | Vulkanox MB2 | 75/0,45 | DBU | 50/0,32 |
| O | TSR S Defo 700 | 100 | Vulkanox MB2 | 75/0,45 | DBU | 50/0,32 |
| P | Butyl 402 | 100 | Vulkanox MB2 | 75/0,45 | DBU | 50/0,32 |

Im folgenden werden an Hand von Standard-Rezepturen und artikelspezifischen Rezepturen die erfindungsgemäßen Vorteile im Vergleich zum Stand der Technik erläutert.

### Mischungsherstellung, Vulkanisation und Vulkanisatprüfung

(Sie erfolgten unter Anlehnung an die ISO-Vorschrift 2475-1975 (E).)

Vor der eigentlichen Mischungsherstellung wurden 1.000 g Polychloropren 6 Min. lang mastiziert, wobei der Walzenspalt so eingestellt war, daß sich eine Wulst mit einem Durchmessser von ca. 12 mm bildete. Nach der Mastikation wurden 800 g Kautschuk abgenommen und mindestens 10, höchstens 120 Min. lang gelagert.

| | |
|---|---|
| Walzwerk | 200 x 390 mm |
| Temperatur | 45 - 55 °C |
| Friktion | 1:1,4 (24 : 34 U/min) |

Vor Beginn des Mischens wurde auf das 30 °C eingestellte Walzwerk mittels Abfallkautschuk auf die angegebene Untergrenze der Betriebstemperatur erwärmt.

Mischfolge und -zeiten entsprachen den obigen Angaben. Nach einer Mischzeit von 13 Min. wurde das Walzfell unter wechselseitigem Einschneiden (dreimal links und dreimal rechts) 1 Min. bearbeitet und innerhalb weiterer 2 Min. sechsmal durch einen 0,8 mm breiten Walzenspalt gezogen, so daß sich eine Gesamtmischzeit von 16 Min. ergab.

Die Mischung wurde bis zur Vulkanisation über Nacht gelagert.

Die Prüfdaten wurden nach den entsprechenden DIN-Vorschriften für Weichgummi ermittelt und sind in Tabelle 3 zusammengestellt worden.

**Tabelle: 3**

| Prüfnormen für Gummiwerkstücke: | | |
|---|---|---|
| **Eigenschaft** | **Einheit** | **DIN-Prüfmethode** |
| *Polymer/Mischung :* | | |
| Mooney - Viskosität | ME | 53523 |
| Mooney - Scorchzeit | min | 53523 |
| Rheometer (Monsanto MDR 2000) | min | 53529 |

| *Vulkanisatwerte :* | | |
|---|---|---|
| Festigkeit | MPa | 53504 |
| Dehnung | % | 53504 |
| Modul | MPa | 53504 |
| Härte | Shore A | 53505 |
| Heißluftalterung | verschieden | 53508 |

### Lagerstabilität von Mischungen und Vulkanisaten (Tabelle 4)

Im Vergleich zur Standardrezeptur gemäß ISO 2475 (Bsp. 1) ist eine MgO freie Standardmischung nicht lagerfähig, auch nicht bei Zugabe von Vulkanox MB2 (Bsp. 3,4). Der stabilisierende Effekt von DBU im Bsp. 5 wird durch die Kombination DBU/Vulkanox MB2 im Bsp. 6 wieder negativ beeinflußt.

Hier führt die erfindungsgemäße Herstellung des Batches aus DBU/Vulkanox MB2 und Zusatz dieses Batches in der Mischung (Bsp. 7) zu einer deutlich lagerstabileren Mischung, ersichtlich am langsameren Anstieg der Mooney-Viskosität und der Scorchzeiten (MS-t5) bei 120°C und 130°C. Bei vergleichbarer Lagerstabilität (Bsp. 1, 2, 7) wird durch den erfindungsgemäßen Compound die Heißluftalterung der Vulkanisate erheblich verbessert.

### Wirksamkeit der erfindungsgemäßen Compounds auf Polychloropren-Vulkanisate -Einfluß der Polymerblends- (Tabelle 5)

Gegenüber der Vergleichsrezeptur (Bsp. 8) wird die Alterungsbeständigkeit, gemessen durch Heißluftalterung bei 100°C, durch Zusatz der Compounds G-L wesentlich verbessert (Bsp. 9-13). Je nach Anwendungsgebiet sind Vulkanisate mit hohem oder niedrigem Modul erwünscht. Dies läßt sich durch Wahl des entsprechenden Polymerblends erzeugen. So führen erfindungsgemäß hergestellte Compounds auf der Basis von unpolaren Polymeren, wie EPM oder EPDM, zu Gummiartikeln mit niedrigem Modul (Bsp. 9-11), während der Zusatz von Compounds auf der Basis von polaren Polymeren wie Levapren zu Vulkanisaten führt, die bei vergleichbarer Bruchdehnung höhere Moduli besitzen.

### Einfluß des Molverhältnisses Mercaptoverbindung/Amidinverbindung auf die Vulkanisateigenschaften (Tabelle 6)

Eine weitere Möglichkeit, die mechanischen Eigenschaften, wie z. B. den Modul des Vulkanisats zu verändern, ist durch die Variation des Molverhältnisses Amidin - zu Mercaptoverbindung möglich. Erhöht man bei konstanten Mercaptoanteil den Anteil des Amidins, so steigt der Modul an, wie Bsp. 16-18 im Falle von Levapren als Polymer und die Beispiele 9, 14 und 15 im Falle von EPDM als Polymer zeigen.

### Einfluß der verschiedenen Polymeren (Tabelle 7)

Zur Herstellung der erfindungsgemäßen Compounds eignen sich neben EVM und EP(D)M auch andere Polymere. Wie die Ergebnisse der Untersuchungen in Tabelle 7 zeigen, besitzen die Amidine und Mercaptoverbindungen gerade in Kombination mit SBR, NR und IIR bei gutem Scorchverhalten eine ausgezeichnete Wirksamkeit gegenüber Heißluftalterung (Bsp. 23-25).

### Wirksamkeit der Compounds bei Chlorbutylkautschuk (Tabelle 8)

Entfernt man aus der Vergleichsrezeptur in Beispiel 26 MgO so verschlechtert sich das Alterungsverhalten -gemessen an der Heißluftbeständigkeit bei 150°C und 170°C (Bsp. 27). Der Zusatz des erfindungsgemäßen Batches in Beispiel 28 und 29 führt zu einer deutlich günstigeren Heißluftbeständigkeit, besonders im Modulanstieg.

### Wirksamkeit der Compounds bei Brombutyl/Polychloropren-Mischungen (Tabelle 9)

Auch hier wird die Alterungsbeständigkeit von Gummmiwerkstoffen hergestellt nach der Vergleichsrezeptur (Bsp. 30) durch die Entfernung von MgO negativ (Bsp. 31) und durch den Ersatz von MgO und Vulkanox MB durch den erfindungsgemäßen Compound positiv beeinflußt (Bsp. 32).

**Tabelle 4a :**

| **Lagerstabilität von Mischungen und Vulkanisaten** | | | | | | | | |
|---|---|---|---|---|---|---|---|---|
| Nr. | Dimension∗∗ | 1^{∗)} | 2^{∗)} | 3^{∗)} | 4^{∗)} | 5^{∗)} | 6^{∗)} | 7 |
| **Rezeptur** | | | | | | | | |
| Baypren | | 100 | 100 | 100 | 100 | 100 | 100 | 100 |
| Stearinsäure | | 0,5 | 0,5 | 0,5 | 0,5 | 0,5 | 0,5 | 0,5 |
| Ruß N 772 | | 30 | 30 | 30 | 30 | 30 | 30 | 30 |
| MgO Paste | | 5,3 | 5,3 | --- | --- | --- | --- | --- |
| Levapren 452 K | | --- | 5 | --- | --- | --- | --- | --- |
| Vulkanox MB2 | | --- | --- | --- | 1,0 | --- | 1,0 | --- |
| DBU | | --- | --- | --- | --- | 1,0 | 1,0 | --- |
| Compound A | | --- | --- | --- | --- | --- | --- | 7,4 |
| ZnO | | 5,0 | 5,0 | 5,0 | 5,0 | 5,0 | 5,0 | 5,0 |
| Vulkacit NPV/C | | 0,5 | 0,5 | 0,5 | 0,5 | 0,5 | 0,5 | 0,5 |

| Mischungseigenschaften : Lagerung bei Raumtemperatur und Scorchverhalten | | | | | | | | |
|---|---|---|---|---|---|---|---|---|
| **ML-1+4/100 °C** | | | | | | | | |
| 0 Tage | [ME] | 53,4 | 48,2 | 51,7 | 69,0 | 49,3 | 52,4 | 47,2 |
| 7 Tage | [ME] | 56,2 | 49,9 | 76,8 | 97,0 | 52,6 | 63,0 | 48,8 |
| 14 Tage | [ME] | 56,6 | 50,5 | 197 | 135 | 55,7 | 68,5 | 52,8 |
| 21 Tage | [ME] | 57,4 | 52,4 | >200 | >200 | 59,4 | 74,7 | 53,4 |
| Diff. 0-21 Tage | [ME] | 4,0 | 4,2 | >150 | >130 | 10,1 | 22,3 | 6,2 |
| MS-t5 / 120°C | min | 10,3 | 10,3 | 5,6 | 5,9 | 8,9 | 7,9 | 10,6 |
| MS-t5 / 130°C | min | 6,7 | 6,4 | 3,4 | 4,0 | 5,6 | 5,4 | 6,8 |

| | | | | | | | | |
|---|---|---|---|---|---|---|---|---|
| ^{∗)} Vergleichsbeispiel | | | | | | | | |
| ^{∗∗)} Dimension: ohne Angabe bedeutet Gewichtsteile | | | | | | | | |

**Tabelle 4b:**

| **Lagerstabilität von Mischungen und Vulkanisaten** | | | | | | | | |
|---|---|---|---|---|---|---|---|---|
| Nr. | | 1^{∗)} | 2^{∗)} | 3^{∗)} | 4^{∗)} | 5^{∗)} | 6^{∗)} | 7 |
| **Rezeptur** | | | | | | | | |
| Baypren | | 100 | 100 | 100 | 100 | 100 | 100 | 100 |
| Stearinsäure | | 0,5 | 0,5 | 0,5 | 0,5 | 0,5 | 0,5 | 0,5 |
| Ruß N 772 | | 30 | 30 | 30 | 30 | 30 | 30 | 30 |
| MgO Paste | | 5,3 | 5,3 | --- | --- | --- | --- | --- |
| Levapren 452 K | | --- | 5 | --- | --- | --- | --- | --- |
| Vulkanox MB2 | | --- | --- | --- | 1,0 | --- | 1,0 | --- |
| DBU | | --- | --- | --- | --- | 1,0 | 1,0 | --- |
| Compound A | | --- | --- | --- | --- | --- | --- | 7,4 |
| ZnO | | 5,0 | 5,0 | 5,0 | 5,0 | 5,0 | 5,0 | 5,0 |
| Vulkacit NPV/C | | 0,5 | 0,5 | 0,5 | 0,5 | 0,5 | 0,5 | 0,5 |

| Vulkanisateigenschaften : Heißluftalterung, 7 und 14 Tage bei 100°C, Normstab S-2 | | | | | | | | |
|---|---|---|---|---|---|---|---|---|
| Änderung mechanischer Werte : | | | | | | | | |
| 7d Modulanstieg | (%) | 83 | 94 | 63 | 14 | 41 | 20 | 7 |
| 7d Härteanstieg | Shore A | 9 | 11 | 8 | 1 | 5 | 2 | 0 |
| 14d Modulanstieg | (%) | 272 | 300 | 212 | 94 | 180 | 120 | 109 |
| 14d Härteanstieg | Shore A | 15 | 18 | 12 | 7 | 11 | 9 | 5 |

| | | | | | | | | |
|---|---|---|---|---|---|---|---|---|
| ^{∗)} Vergleichsbeispiel | | | | | | | | |

**Tabelle 5**

| **Wirksamkeit der erfindungsgemäßen Compounds auf Polychloropren-Vulkanisate** **- Einfluß der Polymerblends -** | | | | | | | |
|---|---|---|---|---|---|---|---|
| Nr. | | 8^{∗)} | 9 | 10 | 11 | 12 | 13 |
| **Rezeptur (ISO 2475)** | | | | | | | |
| Baypren 210 | | 100 | 100 | 100 | 100 | 100 | 100 |
| Stearinsäure | | 0,5 | 0,5 | 0,5 | 0,5 | 0,5 | 0,5 |
| Ruß N 772 | | 30 | 30 | 30 | 30 | 30 | 30 |
| Zinkweiß RS | | 5,0 | 5,0 | 5,0 | 5,0 | 5,0 | 5,0 |
| Vulkacit NPV/C | | 0,5 | 0,5 | 0,5 | 0,5 | 0,5 | 0,5 |
| MgO Paste | | 5,3 | --- | --- | --- | --- | --- |

| Compound (Polymerbasis) | | | | | | | |
|---|---|---|---|---|---|---|---|
| G (EPDM) | | --- | 4,5 | --- | --- | --- | --- |
| H (EPDM/EVM= 80/20) | | --- | --- | 4,5 | --- | --- | --- |
| I (EPDM/EVM= 50/50) | | --- | --- | --- | 4,5 | --- | --- |
| K (EPDM/EVM= 20/80) | | --- | --- | --- | --- | 4,5 | --- |
| L (EVM) | | --- | --- | --- | --- | --- | 4,5 |

| **Mischungseigenschaften** | | | | | | | |
|---|---|---|---|---|---|---|---|
| MS-t5/120 °C | [min] | 10,1 | 9,2 | 9,1 | 9,6 | 9,8 | 9,8 |
| MS-t5/130 °C | [min] | 6,6 | 6,0 | 6,2 | 6,2 | 6,1 | 6,2 |

| **Monsanto MDR 2000/150°C** | | | | | | | |
|---|---|---|---|---|---|---|---|
| t₁₀ | [min] | 3,1 | 2,2 | 2,2 | 2,3 | 2,3 | 2,3 |
| t₈₀ | [min] | 19,7 | 17,0 | 17,5 | 17,4 | 17,6 | 17,5 |
| t₉₀ | [min] | 29,7 | 26,4 | 27,0 | 26,8 | 27,3 | 26,9 |

| **Vulkanisateigenschaften: Normstab S-2** | | | | | | | |
|---|---|---|---|---|---|---|---|
| **Heizzeit: 150 °C/t90 + 5min** | | | | | | | |
| Zugfestigkeit | [MPa] | 21,9 | 23,1 | 23,1 | 23,2 | 23,9 | 24,1 |
| Bruchdehnung | [%] | 379 | 503 | 488 | 500 | 501 | 493 |
| Spannungswert S100 | [MPa] | 2,4 | 2,6 | 2,6 | 2,6 | 2,7 | 2,7 |
| Spannungswert S200 | [MPa] | 6,7 | 6,3 | 6,2 | 6,3 | 6,6 | 6,7 |
| Spannungswert S300 | [MPa] | 15,2 | 12,8 | 12,8 | 13,1 | 13,5 | 13,8 |
| Härte 23 °C | [Shore A] | 60,0 | 64 | 64 | 65 | 64 | 64 |

| **HL-Alterung bei 100 °C:** | | | | | | | |
|---|---|---|---|---|---|---|---|
| **Normstab S-2** | | | | | | | |
| 7d S.-Anstieg | [%] | 136 | 23 | 26 | 15 | 14 | 14 |
| 7d H.-Anstieg | [Shore A] | 12 | 1 | 1 | 0 | 0 | 1 |
| | | | | | | | |
| 14d S.-Anstieg | [%] | 347 | 119 | 119 | 107 | 118 | 96 |
| 14d H.-Anstieg | [Shore A] | 20 | 9 | 9 | 7 | 8 | 7 |
| | | | | | | | |
| 21d S.-Anstieg | [%] | 618 | 203 | 196 | 189 | 181 | 177 |
| 21d H.-Anstieg | [Shore A] | 25 | 11 | 11 | 10 | 11 | 10 |

| | | | | | | | |
|---|---|---|---|---|---|---|---|
| ^{**∗)**} **Vergleichsbeispiel** | | | | | | | |

**Tabelle 6**

| Wirksamkeit der Compounds bei Polychloropren - Änderung des Molverhältnisses Mercapto/Amidin - | | | | | | | | |
|---|---|---|---|---|---|---|---|---|
| Nr. | | 8^{∗)} | 14 | 15 | 16 | 17 | 18 | 19 |
| **Rezeptur** | | | | | | | | |
| Baypren 210 | | 100 | 100 | 100 | 100 | 100 | 100 | 100 |
| Stearinsäure | | 0,5 | 0,5 | 0,5 | 0,5 | 0,5 | 0,5 | 0,5 |
| Ruß N 772 | | 30 | 30 | 30 | 30 | 30 | 30 | 30 |
| MgO Paste | | 5,3 | --- | --- | --- | --- | --- | --- |
| Compound F | | --- | 4,0 | --- | --- | --- | --- | --- |
| Compound E | | --- | --- | 4,0 | --- | --- | --- | --- |
| Compound C | | --- | --- | --- | 6,5 | --- | --- | --- |
| Compound A | | --- | --- | --- | --- | 7,4 | --- | --- |
| Compound B | | --- | --- | --- | --- | --- | 5,1 | --- |
| Compound D | | --- | --- | --- | --- | --- | --- | 5,1 |
| Zinkweiß RS | | 5,0 | 5,0 | 5,0 | 5,0 | 5,0 | 5,0 | 5,0 |
| Vulkacit NPV/C | | 0,5 | 0,5 | 0,5 | 0,5 | 0,5 | 0,5 | 0,5 |

| **Mischungseigenschaften** | | | | | | | | |
|---|---|---|---|---|---|---|---|---|
| MS-t5/120 °C | [min] | 10,1 | 8,0 | 8,3 | 8,2 | 10,6 | 8,4 | 8,0 |
| MS-t5/130 °C | [min] | 6,6 | 5,7 | 5,6 | 5,6 | 6,8 | 5,7 | --- |

| **Monsanto MDR 2000/150 °C** | | | | | | | | |
|---|---|---|---|---|---|---|---|---|
| t₁₀ | [min] | 3,1 | 2,3 | 2,3 | 1,9 | 2,5 | 2,1 | 2,4 |
| t₈₀ | [min] | 19,7 | 19,2 | 19,1 | 14,8 | 17,7 | 15,4 | 15,1 |
| t₉₀ | [min] | 29,7 | 29,6 | 29,5 | 24,6 | 27,0 | 24,5 | 24,0 |
| F | [dNm] | 16,0 | 12,8 | 12,6 | 7,9 | 11,0 | 9,1 | 10,5 |

| **Vulkanisateigenschaften: Normstab S-2** | | | | | | | | |
|---|---|---|---|---|---|---|---|---|
| **Heizzeit: 150 °C/t90 + 5min** | | | | | | | | |
| Zugfestigkeit | [MPa] | 21,9 | 24,5 | 24,8 | 25,0 | 23,8 | 25,5 | 22,8 |
| Bruchdehnung | [%] | 379 | 475 | 475 | 634 | 485 | 566 | 410 |
| Spannungswert S100 | [MPa] | 2,4 | 3,0 | 2,9 | 2,7 | 2,4 | 2,6 | 2,5 |
| Spannungswert S200 | [MPa] | 6,7 | 7,2 | 7,3 | 6,0 | 6,1 | 5,9 | 6,0 |
| Spannungswert S300 | [MPa] | 15,2 | 14,4 | 14,5 | 10,8 | 13,0 | 11,2 | --- |
| Härte 23 °C | [Shore A] | 60,0 | 64,4 | 62,8 | 64,8 | 61,2 | 63,6 | 63,4 |

| **HL-Alterung bei 100 °C:** | | | | | | | | |
|---|---|---|---|---|---|---|---|---|
| **Normstab S-2** | | | | | | | | |
| 7d S.-Anstieg | [%] | 136 | 24 | 30 | 4 | 7 | 6 | --- |
| 7d H.-Anstieg | [Shore A] | 12 | 2 | 3 | 0 | 0 | 0 | --- |
| | | | | | | | | |
| 14d S.-Anstieg | [%] | 347 | 118 | 127 | 55 | 109 | 69 | 110 |
| 14d H.-Anstieg | [Shore A] | 20 | 9 | 10 | 4 | 5 | 5 | 7 |
| | | | | | | | | |
| 21d S.-Anstieg | [%] | 618 | 196 | 205 | 122 | 204 | 126 | 140 |
| 21d H.-Anstieg | [Shore A] | 25 | 13 | 14 | 9 | 13 | 10 | 11 |

| | | | | | | | | |
|---|---|---|---|---|---|---|---|---|
| ∗) Vergleichsbeispiel | | | | | | | | |

**Tabelle 7**

| **Wirksamkeit der Compounds auf Polychloropren** **-verschiedene Polymerträger-** | | | | | | | | |
|---|---|---|---|---|---|---|---|---|
| Nr. | | 8^{∗)} | 20 | 21 | 22 | 23 | 24 | 25 |
| **Rezeptur (ISO 2475)** | | | | | | | | |
| Baypren 210 | | 100 | 100 | 100 | 100 | 100 | 100 | 100 |
| Stearinsäure | | 0,5 | 0,5 | 0,5 | 0,5 | 0,5 | 0,5 | 0,5 |
| Ruß N 772 | | 30 | 30 | 30 | 30 | 30 | 30 | 30 |
| Zinkweiß RS | | 5,0 | 5,0 | 5,0 | 5,0 | 5,0 | 5,0 | 5,0 |
| Vulkacit NPV/C | | 0,5 | 0,5 | 0,5 | 0,5 | 0,5 | 0,5 | 0,5 |
| MgO Paste | | 5,3 | --- | --- | --- | --- | --- | --- |

| Compound (Polymerbasis) | | | | | | | | |
|---|---|---|---|---|---|---|---|---|
| L (EVM) | | --- | 4,5 | --- | --- | --- | --- | --- |
| G (EPDM) | | --- | --- | 4,5 | --- | --- | --- | --- |
| M (BR) | | --- | --- | --- | 4,5 | | --- | --- |
| N (SBR) | | --- | --- | --- | --- | 4,5 | | --- |
| O (NR) | | --- | --- | --- | --- | --- | 4,5 | --- |
| P (IIR) | | --- | --- | --- | --- | --- | --- | 4,5 |

| **Mischungseigenschaften** | | | | | | | | |
|---|---|---|---|---|---|---|---|---|
| MS-t5/120 °C | [min] | 10,1 | 9,8 | 9,2 | 8,5 | 9,6 | 9,0 | 9,3 |
| MS-t5/130 °C | [min] | 6,6 | 6,2 | 6,0 | 6,1 | 7,2 | 7,0 | 7,1 |

| **Monsanto MDR 2000/150 °C** | | | | | | | | |
|---|---|---|---|---|---|---|---|---|
| t₁₀ | [min] | 3,1 | 2,3 | 2,2 | 2,3 | 2,1 | 2,2 | 2,2 |
| t₈₀ | [min] | 19,7 | 17,5 | 17,0 | 16,9 | 16,5 | 16,8 | 16,8 |
| t₉₀ | [min] | 29,7 | 26,9 | 26,4 | 26,4 | 25,7 | 26,2 | 26,0 |

| **Vulkanisateigenschaften: Normstab S-2** | | | | | | | | |
|---|---|---|---|---|---|---|---|---|
| **Heizzeit: 150 °C/t90 + 5min** | | | | | | | | |
| Zugfestigkeit | [MPa] | 21,9 | 24,1 | 23,1 | 22,9 | 23,9 | 22,4 | 21,2 |
| Bruchdehnung | [%] | 379 | 493 | 503 | 470 | 481 | 469 | 435 |
| Spannungswert S100 | [MPa] | 2,4 | 2,7 | 2,6 | 2,8 | 2,8 | 2,9 | 2,9 |
| Spannungswert S200 | [MPa] | 6,7 | 6,7 | 6,3 | 6,8 | 6,8 | 6,9 | 7,0 |
| Spannungswert S300 | [MPa] | 15,2 | 13,8 | 12,8 | 13,6 | 13,5 | 13,4 | 13,7 |
| Härte 23 °C | [Shore A] | 60,0 | 64 | 64 | 65 | 65 | 65 | 65 |

| **HL-Alterung bei 100 °C: Normstab S-2** | | | | | | | | |
|---|---|---|---|---|---|---|---|---|
| 7d S.-Anstieg | [%] | 136 | 14 | 23 | 6 | 8 | 6 | 3 |
| 7d H.-Anstieg | [Shore A] | 12 | 1 | 1 | 0 | 0 | 0 | 0 |
| | | | | | | | | |
| 14d S.-Anstieg | [%] | 347 | 96 | 119 | 75 | 42 | 75 | 75 |
| 14d H.-Anstieg | [Shore A] | 20 | 7 | 9 | 6 | 3 | 6 | 6 |
| | | | | | | | | |
| 21d S.-Anstieg | [%] | 618 | 177 | 203 | 142 | 117 | 137 | 138 |
| 21d H.-Anstieg | [Shore A] | 25 | 10 | 11 | 11 | 8 | 11 | 11 |

| | | | | | | | | |
|---|---|---|---|---|---|---|---|---|
| ^{∗)} Vergleichsbeispiel | | | | | | | | |

**Tabelle 8**

| **Wirksamkeit der Compounds bei Chlorbutyl** | | | | | |
|---|---|---|---|---|---|
| Beispiel: Hitzebeständige Förderbanddecken Rezeptur auf Basis Chlorbutyl | | | | | |
| Nr. | | 26^{*)} | 27^{*)} | 28 | 29 |
| Rezeptur | | | | | |
| Chlorbutyl 1240 | | 80 | 80 | 80 | 80 |
| EPDM 345 | | 20 | 20 | 20 | 20 |
| Stearinsäure | | 2 | 2 | 2 | 2 |
| Maglite DE | | 1 | --- | --- | --- |
| Ruß Corax N 347 | | 50 | 50 | 50 | 50 |
| Vulkanox DDA | | 1 | 1 | 1 | 1 |
| Ingralen 450 | | 10 | 10 | 10 | 10 |
| Cumeronharz B2-75P | | 10 | 10 | 10 | 10 |
| Zinkoxid aktiv | | 5 | 5 | 5 | 5 |
| Vulkacit DM/MG | | 1 | 1 | 1 | 1 |
| Vulkacit Thiuram/C | | 2 | 2 | 2 | --- |
| Compound E | | --- | --- | 4 | 4 |

| **Mischungseigenschaften** | | | | | |
|---|---|---|---|---|---|
| Batchtemperatur | [°C] | 92 | 86 | 84 | 84 |
| ML 1+4/100 °C | [ME] | 57,4 | 60,7 | 68,2 | 70,0 |
| MR | [%] | 5,6 | 5,8 | 6,1 | 6,3 |
| MS-t5/120 °C | [min] | 32,4 | 20,5 | 23,3 | >50 |

| **Monsanto MDR 2000/170 °C** | | | | | |
|---|---|---|---|---|---|
| ts01 | [min] | 1,6 | 1,0 | 2,2 | 3,1 |
| t₁₀ | [min] | 1,2 | 0,8 | 1,5 | 3,1 |
| t₈₀ | [min] | 4,3 | 2,0 | 13,8 | 26,5 |
| t₉₀ | [min] | 5,5 | 2,4 | 18,9 | 31,8 |

| **Vulkanisateigenschaften: Normstab S-2** | | | | | |
|---|---|---|---|---|---|
| **Heizzeit: 170 °C/t90** | | | | | |
| Zugfestigkeit | [MPa] | 10,3 | 10,1 | 10,0 | 9,9 |
| Bruchdehnung | [%] | 837 | 935 | 590 | 390 |
| Spannungswert S100 | [MPa] | 1,2 | 1,1 | 1,7 | 2,4 |
| Spannungswert S200 | [MPa] | 1,9 | 1,6 | 3,3 | 5,0 |
| Spannungswert S300 | [MPa] | 3,2 | 2,6 | 5,3 | 7,8 |
| Härte 23 °C | [Shore A] | 61,2 | 59,8 | 66,9 | 70,4 |

| **HL-Alterung bei 150 °C: Normstab S-2** | | | | | |
|---|---|---|---|---|---|
| 1d D.-Abfall | [%] | 12 | 22 | 14 | 2 |
| 1d S.-Anstieg | [%] | 43 | 57 | 31 | 8 |
| 1d H.-Anstieg | [Shore A] | 9 | 9 | 7 | 6 |
| | | | | | |
| 3d D.-Abfall | [%] | 30 | 45 | 12 | 4 |
| 3d S.-Anstieg | [%] | 75 | 111 | 53 | 18 |
| 3d H.-Anstieg | [Shore A] | 13 | 15 | 11 | 9 |
| | | | | | |
| 5d D.-Abfall | [%] | 49 | 66 | 20 | 10 |
| 5d S.-Anstieg | [%] | 96 | 163 | 65 | 18 |
| 5d H.-Anstieg | [Shore A] | 15 | 17 | 12 | 11 |

| **HL-Alterung bei 170 °C: Normstab S-2** | | | | | |
|---|---|---|---|---|---|
| 1d D.-Abfall | [%] | 19 | 50 | 10 | 0 |
| 1d S.-Anstieg | [%] | 45 | 70 | 25 | 2 |
| 1d H.-Anstieg | [Shore A] | 11 | 10 | 9 | 6 |
| | | | | | |
| 3d D.-Abfall | [%] | 60 | 68 | 41 | 10 |
| 3d S.-Anstieg | [%] | 78 | 121 | 51 | 5 |
| 3d H.-Anstieg | [Shore A] | 15 | 17 | 12 | 10 |
| | | | | | |
| 5d D.-Abfall | [%] | 77 | 81 | 66 | 39 |
| 5d S.-Anstieg | [%] | 104 | 154 | 59 | 5 |
| 5d H.-Anstieg | [Shorc A] | 17 | 18 | 13 | 10 |

| | | | | | |
|---|---|---|---|---|---|
| ^{*)} Vergleichsbeispiel | | | | | |

**Tabelle 9**

| **Wirksamkeit der Compounds bei Brombutyl-Polychloropren** | | | | |
|---|---|---|---|---|
| **Beispiel: Antriebsriemen Rezeptur auf Basis Brombuty-Polychlorpren** | | | | |
| Nr. | | 30^{*)} | 31^{*)} | 32 |
| **Rezeptur** | | | | |
| Brombutyl 2030 | | 25 | 25 | 25 |
| Baypren 611 | | 75 | 75 | 75 |
| Stearinsäure | | 1 | 1 | 1 |
| Maglite DE | | 3 | --- | --- |
| Ruß Statex N 330 | | 50 | 50 | 50 |
| Vulkanox DDA | | 2 | 2 | 2 |
| Sundex 790 | | 9 | 9 | 9 |
| Vulkanox MB2/MG | | 1 | 1 | --- |
| Zinkoxid aktiv | | 5 | 5 | 5 |
| Compound E | | --- | --- | 4 |
| | | | | |

| **Mischungseigenschaften** | | | | |
|---|---|---|---|---|
| Batchtemperatur | [°C] | 84 | 84 | 85 |
| ML 1+4/100 °C | [ME] | 75,7 | 62,0 | 79,0 |
| MR | [%] | 12,8 | 10,4 | 14,7 |
| MS-t5/120 °C | [min] | 6,0 | 4,5 | 4,3 |
| | | | | |

| **Monsanto MDR 2000/170 °C** | | | | |
|---|---|---|---|---|
| ts01 | [min] | 0,4 | 0,4 | 0,3 |
| t₁₀ | [min] | 0,6 | 0,5 | 0,4 |
| t₈₀ | [min] | 8,3 | 2,4 | 2,6 |
| t₉₀ | [min] | 17,1 | 9,5 | 7,0 |

| **Vulkanisateigenschaften: Normstab S-2** | | | | |
|---|---|---|---|---|
| **Heizzeit: 170°C/t90** | | | | |
| Zugfestigkeit | [MPa] | 21,3 | 23,6 | 22,3 |
| Bruchdehnung | [%] | 288 | 405 | 310 |
| Spannungswert S100 | [MPa] | 5,7 | 4,1 | 5,1 |
| Spannungswert S200 | [MPa] | 14,5 | 11,0 | 13,7 |
| Spannungswert S300 | [MPa] | --- | 18,0 | 21,6 |
| Härte 23 °C | [Shore A] | 75,8 | 71,6 | 72,8 |
| | | | | |

| **HL-Alterung bei 170 °C: Normstab S-2** | | | | |
|---|---|---|---|---|
| 1d D.-Abfall | [%] | 13 | 13 | 6 |
| 1d S.-Anstieg | [%] | 24 | 29 | 16 |
| 1d H.-Anstieg | [Shore A] | 4 | 4 | 2 |
| | | | | |
| 3d D.-Abfall | [%] | 20 | 28 | 18 |
| 3d S.-Anstieg | [%] | 52 | 79 | 48 |
| 3d H.-Anstieg | [Shore A] | 7 | 8 | 6 |
| | | | | |
| 5d D.-Abfall | [%] | 33 | 42 | 28 |
| 5d S.-Anstieg | [%] | 72 | 102 | 60 |
| 5d H.-Anstieg | [Shore A] | 10 | 11 | 8 |
| | | | | |
| 7d D.-Abfall | [%] | 41 | 48 | 38 |
| 7d S.-Anstieg | [%] | 102 | 148 | 90 |
| 7d H.-Anstieg | [Shore A] | 12 | 14 | 10 |

| | | | | |
|---|---|---|---|---|
| ^{*)} Vergleichsbeispiel | | | | |

## Patentansprüche

1. Polymercompounds bestehend aus
a) cyclischen und/oder acyclischen Amidinen,
b) Mercaptoverbindungen des Benzothiazols, Benzoimidazols, Benzopyrimidins und/oder des Benzotriazins
c) Ethylen-Propylen-Kautschuken (EPM), Ethylen-Propylen-Dien-Kautschuken (EPDM), Ethylenvinylacetat-Kautschuken (EVM), Butadienkautschuken (BR), Styrol-Butadien-Kautschuken (SBR), Naturkautschuken (NR), Butadien Acrylnitril-Kautschuke (NBR) und/oder Butylkautschuken (IIR) und
d) gegebenenfalls andere Kautschukhilfsmittel oder Trägermaterialien,
wobei die Komponenten a) und b) im Molverhältnis von 0,25:1 bis 2:1 vorliegen und der Anteil des Polymerbinders c) 90 bis 10 Gew.%, bezogen auf das Gesamtgewicht der Komponenten a) bis c), beträgt.

2. Verwendung der Polymercompounds nach Anspruch 1 bei der Vulkanisation halogenhaltiger Kautschuke.

## Claims

1. Polymer compounds consisting of
a) cyclic and/or acyclic amidines,
b) mercapto compounds of benzothiazole, benzimidazole, benzopyrimidine and/or benzotriazine,
c) ethylene/propylene rubbers (EPM), ethylene-propylene-diene rubbers (EPDM), ethylene-vinyl acetate rubbers (EVM), butadiene rubbers (BR), styrene-butadiene rubbers (SBR), natural rubbers (NR), butadiene-acrylonitrile rubbers (NBR) and/or butyl rubbers (IIR), and
d) optionally other rubber adjuvant substances or support materials,
wherein components a) and b) are present in a molar ratio from 0.25:1 to 2:1, and the proportion of polymer binder c) is 90 to 10 % by weight with respect to the total weight of components a) to c).

2. Use of the polymer compounds according to claim 1 in the vulcanisation of halogen-containing rubbers.

## Revendications

1. Compositions polymères consistant en
a) des amidines cycliques et/ou acycliques,
b) des mercaptans dérivés du benzothiazole, du benzimidazole, de la benzopyrimidine et/ou de la benzotriazine,
c) des caoutchoucs d'éthylène-propylène (EPM), des caoutchoucs d'éthylène-propylène-diène (EPDM), des caoutchoucs d'éthylène-acétate de vinyle (EVM), des caoutchoucs de butadiène (BR), des caoutchoucs de styrène-butadiène (SBR), des caoutchoucs naturels (NR), des caoutchoucs de butadiène-acrylonitrile (NBR) et/ou des caoutchoucs Butyl (IIR) et
d) le cas échéant d'autres produits auxiliaires pour le caoutchouc ou matières de support,
à un rapport molaire de 0,25:1 à 2:1 entre les composants a) et b) et à une proportion du liant polymère c) qui représente de 90 à 10 % du poids total des composants a) à c).

2. Utilisation des compositions polymères selon la revendication 1 à la vulcanisation de caoutchoucs contenant des halogènes.
